# EUROPEAN PATENT APPLICATION

(11) **EP 4 738 726 A1**
(43) Date of publication of application: **06.05.2026**
(21) Application number: 25305329.2
(22) Date of filing: 12.03.2025
(51) Int. Cl.: H04B 7/185, H04W 36/00, H04W 36/08, H04L 47/17, H04W 28/086, H04W 36/16

(54) **EXCHANGE OF SATELLITE INFORMATION FOR TRANSFERRING USER DATA**

(30) Priority: 29.10.2024 EP 24306820
(71) Applicant: THALES DIS FRANCE SAS, 92190 Meudon (FR); THALES, 92190 Meudon (FR)
(72) Inventor: PANAITOPOL, Dorin, 92250 La Garenn-Colombes (FR); RONTEIX-JACQUET, Flavien, 31037 Toulouse (FR); EL JAAFARI, Mohamed, 31037 Toulouse (FR); CHUBERRE, Nicolas, 31820 Pibrac (FR); FINE, Jean-Yves, 13010 Marseille (FR)
(74) Representative: Lotaut, Yacine Diaw

(57) **Abstract**

The invention provides a method of processing user data in a first satellite of a Non-Terrestrial Network, NTN, wherein the first satellite stores user data from at least one user equipment located in a first cell served by the first satellite, the method comprising the following steps:
- transmitting (205) a request message to a second satellite of the NTN, the request message requesting satellite information related to a second satellite;
- receiving (207) a response message from the second satellite, the response message comprising satellite information related to the second satellite;
- deciding (217) to transfer a set of stored user data to the second satellite, based at least on the satellite information related to the second satellite;
- transferring (218) the set of stored user data to the second satellite.

## Description

This invention is related to the field of telecommunications network, in particular of Non-Terrestrial Network(s) (NTN).

The invention is useful in particular, but not exclusively, in the context of offloading or transfer of user data from a first satellite to a second satellite in an NTN to optimize resources in the NTN.

Non-Terrestrial Networks may be based on satellites, high altitude platforms (HAPS) or other aircraft systems located at high altitudes, or even drones/UAV, which may be used as relay stations or base stations of a telecommunications network.

In particular, NTN can be used starting with the fifth Generation mobile communication system, 5G (and future generations such as 6G), telecommunications network in cooperation with a 5G Terrestrial Network, 5G TN. Currently 5G NTN has two potential trends: for NB-loT/loT-like communications (using LTE technology starting with Release-18) or for smartphones and VSAT broadband communications (using 5G NR New Radio technology starting with Releases 17 and 18). Satellites can therefore be used as relay nodes (in the case of transparent satellites) or as base stations, called gNB in a 5G-like network (in the case of regenerative satellites), or eNB in an LTE-like network, potentially xNB for 6G networks.

The use of NTN satellites enable to expand the coverage of 5G TN, as some areas cannot be served by the 5G TN, such as oceans or isolated rural areas for example.

Some NTN satellites, called Store and Forward, S&F, satellites, are able to receive user data from user equipments, UEs, store the data and forward it/transfer the user data to the 5G ground system via a link with a terrestrial gateway, said link being called "feeder link" in what follows. In several applications, 5G NTN can be interfaced with the 5G TN (e.g. at core network level) allowing data transfer/communication between 5G NTN system/UE and 5G TN system/UE.

User equipments encompass cellular devices such as mobile phones and other SIM-enabled devices such as tablets, smartwatches and Internet of Things, IoT, devices, and/or High Power UEs (HPUEs) and/or VSAT (Very Small Antenna Aperture) equipments mounted on drones/airplanes/vehicles etc..

The terrestrial gateway is linked to the 5G or 4G core network, so as to be able to forward the user data received from the satellites, to the respective recipients of the user data, via the TN.

S&F satellites are therefore regenerative satellites that can form base stations of a New Generation Radio Access Network, NG RAN.

However, because the number of terrestrial gateways (GWs) is currently low, and/or because some satellites may be in relative motion compared to earth and/or because radio conditions may vary over time, the feeder link of a satellite that is non stationary (NGSO satellite) is intermittent (e.g. the satellite is not always connected to a GW).

This causes, that the satellite cannot forward the user data that is accumulating/stored (e.g. in the satellite memory), to a terrestrial gateway, during a given period where the feeder link is not available. In some cases, depending on the geographical zone (or area), the user traffic, the user density and coverage of the satellite, this may cause an overload of the satellite that is not able to receive new user data because its storage capacity is full. This also increases the delay associated with the forwarding of the user data, which, in some applications, may deteriorate the quality of service. In some other cases, due to energy limitations, memory or CPU, data cannot be stored indefinitely while waiting for a feeder link availability. In such case, satellite (current or future) available/remaining energy can also be part of the required inputs for a more reliable and more optimized routing between satellites or/and between satellites and ground segment to improve the network performance.

There is therefore a need to improve the quality of service for UEs in radiocommunication with an S&F satellite of an NTN, for processing user data, storing it and/or transferring it to another network (TN or NTN) or another NTN system component.

The invention aims at improving the situation.

A first aspect of the invention concerns a method of processing user data in a first satellite of a Non-Terrestrial Network, NTN, wherein the first satellite stores user data from at least one user equipment located in a first cell served by the first satellite, the method comprising the following steps:
- transmitting a request message to a second satellite of the NTN, the request message requesting satellite information related to a second satellite;
- receiving a response message from the second satellite, the response message comprising satellite information related to the second satellite;
- deciding to transfer a set of stored user data to the second satellite, based at least on the satellite information related to the second satellite;
- transferring the set of stored user data to the second satellite.

Therefore, satellite information is exchanged between satellites of an NTN, in particular between S&F satellites. This allows them to optimize the storage and processing capacities by offering the possibility to offload user data to another satellite having more current capacities or a better connectivity to a terrestrial network. Also, because the satellite information related to the second satellite is taken into account before transferring the user data to the second satellite, the invention enables to ensure that the second satellite is able to process, store and/or forward the transferred user data.

The set of data to be transferred can be all the user data stored in the first satellite or only a part of it.

According to some embodiments, the method may further comprise establishing an Inter-Satellite Link, ISL, between the first satellite and the second satellite before transmitting the request message.

The ISL can therefore be activated before transmitting the request message, which enables to optimize the resources of the first and second satellites.

In complement, the method may further comprise, after establishing the ISL between the first satellite and the second satellite, activating a 5G New Radio, NR, Xn interface, or a Long Term Evolution, LTE, X2 interface, between the first satellite and the second satellite, the request message may be transmitted on the X2 or Xn interface and the response message may be received on the X2 or Xn interface. In complement, the method may further comprise 6G protocols.

This enables to use an interface that is originally defined for and used by terrestrial base stations for exchanging signalling data. This enables to ensure interoperability between different satellites and to reuse an existing interface that is optimized for exchanging information between base stations.

According to some embodiments, the first satellite may decide to transfer the set of user data to the second satellite if at least one predetermined overload condition and/or predetermined delay condition is met, and if no link to a terrestrial gateway is accessible to the first satellite.

This enables to transfer data only if the first satellite is in an overload condition or has long delay in processing or transferring user data, and only if the link to the terrestrial gateway is not accessible. The use of the resources of the NTN is therefore optimized between the different satellites.

According to some embodiments, the satellite information related to the second satellite may be representative of storage and/or processing capabilities of the second satellite, of an inter-satellite link, ISL, between the first satellite and the second satellite, and/or of a link between the second satellite and a terrestrial gateway.

This enables to collect relevant satellite information related to the second satellite, in order to optimize the use of resources in the NTN.

In complement, the satellite information related to the second satellite may comprise one or several of the following information:
- an updated ISL time interval of the ISL between the first satellite and the second satellite; and/or
- at least one link time interval describing an availability of a link between the second satellite and a terrestrial gateway; and/or the throughput capacity of the link and/or
- at least one satellite capacity information, describing maximum or current storage capacity, or maximum or current processing capacity, of the second satellite; and/or
- a satellite type of the second satellite; and/or
- position and speed information related to the second satellite; and/or
- feeder link latency indicating a latency associated with the link between the second satellite and the terrestrial gateway; and/or
- a current load and/or used capacity of the second satellite; and/or amount of data received (and/or to be transmitted) from (to) the second satellite.

Such relevant satellite information enables to take a decision to transfer user data to the second satellite if it enables to optimize the resources of the NTN used for storing, processing and forwarding the user data.

According to some embodiments, the method may further comprise storing, by the first satellite, the satellite information related to the second satellite, in a connectivity table.

Therefore, the satellite information can be stored for subsequent use, for example for a later time when the first satellite is in overload condition or experiences long delays.

In complement, the method may further comprise, after receiving the response message comprising the satellite information related to the second satellite, receiving an update message comprising a satellite information update related to the second satellite, and updating the satellite information related to the second satellite stored in the connectivity table based on the satellite information update.

Therefore, the satellite information related to the second satellite can be regularly updated based on updates received from the second satellite, which enables to maintain accurate satellite information related to the second satellite, and which ensures that the decision to transfer data to the second satellite optimizes the resources of the NTN.

Alternatively or in complement, the first satellite may transmit request messages to a plurality of other satellites including the second satellite, may receive response messages from the plurality of other satellites, each response message comprising satellite information related to the other satellite from which the response message is received, and the first satellite may store the received satellite information for the plurality of other satellites in the connectivity table. Alternatively, the plurality of other satellites including the second satellite can be located at a single-hop or a multi-hop distance from the first satellite. Alternatively or in complement, the connectivity table may contain information (e.g. amount of data to be transmitted and multi-hop distance) with respect to the gateway or gateways.

This enables to maintain a connectivity table comprising satellite information related to a plurality of other satellites.

In complement, the decision to transfer user data to the second satellite may comprise selecting the second satellite among the plurality of other satellites based on the satellite information stored in the connectivity table.

This enables to select the second satellite as the other satellite having the highest storage and/or processing capacities, or having the best link to a terrestrial gateway and/or with the first satellite. The resources of the NTN used for processing the user data are therefore optimized.

According to some embodiments, the decision to transfer user data to the second satellite may comprise a comparison of satellite information related to the first satellite with the satellite information related to the second satellite.

This enables to transfer the user data to the second satellite, preferably when the second satellite has a better link to a terrestrial gateway and/or has better storage or processing capacities than the first satellite. The use of resources in the NTN is therefore optimized.

A second aspect of the invention concerns a computer program comprising instructions arranged for implementing the method according to the first aspect of the invention, when said instructions are executed by a processor.

A third aspect of the invention concerns a satellite of a Non-Terrestrial Network, NTN, comprising a memory storing user data from at least one user equipment located in a first cell served by the first satellite, the satellite further comprising a processor configured for:
- transmitting, via a radio interface or optical interface, a request message to another satellite of the NTN, the request message requesting satellite information related to the other satellite;
- receiving, via the radio interface or optical interface, a response message from the other satellite, the response message comprising satellite information related to the other satellite;
- deciding to transfer a set of stored user data to the second satellite, based at least on the satellite information related to the other satellite;
- transferring, via the radio interface or optical interface, the set of stored user data to the other satellite.

A fourth aspect of the invention concerns a telecommunications system comprising several satellites according to the third aspect of the invention, and at least one terrestrial gateway configured to communicate with the satellites via respective radio/optical links, wherein the terrestrial gateway is connected to a core network of a terrestrial network.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

Brief description of the drawings:
[Fig. 1] shows a telecommunications system according to some embodiments of the invention;
[Fig. 2] illustrates the steps of a method of processing user data in a telecommunications system, according to some embodiments of the invention;
[Fig. 3] illustrates the structure of a satellite according to some embodiments of the invention.

### Detailed description

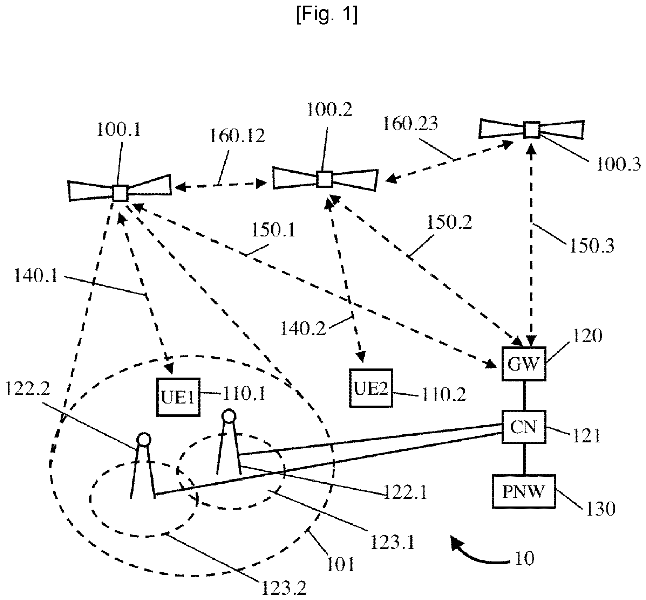

Figure 1 shows a telecommunications system 10 according to some embodiments of the invention.

The telecommunications system 10 comprises a plurality of Non-Terrestrial Network, NTN, satellites, including a first satellite 100.1, a second satellite 100.2 and a third satellite 100.3. No restriction is attached to the number of NTN satellites of the system 10, which can comprise any number N of satellites, of different types, N being an integer greater than 1.

Indeed, in an NTN, satellites can be of different satellite types, which are defined by the radius range and shape of their orbit. For example, the following satellite types can be used in NTN:
- GEostationary Orbit, GEO, satellites for which the orbit is of 35786 kms and which relative position to the earth is fixed;
- High Elliptical Orbit, HEO, satellites for which the orbit is comprised between 28000 and 50000 km
- Medium Earth Orbit, MEO, satellites, for which the orbit is comprised between 7000 to 25000 kms;
- Low Earth Orbit, LEO, satellites, for which the orbit is comprised between 300 to 1500 kms.

According to the invention, the first satellite 100.1, second satellite 100.2 and third satellite 100.3 are regenerative satellites comprising processing means and a memory, which are configured for storing and forwarding user data from or to User Equipments, UEs, that are located in respective satellite cells. A first satellite cell 101 associated with the first satellite 100.1 is shown on figure 1. As illustrated, the first satellite, or a satellite part of NTN, cell 101 is a geographical area in which the first satellite 100.1 is capable of communicating with UEs, including for example a first UE 110.1 that is shown on figure 1 for illustrative purposes.

For example, the first satellite 100.1 can be dedicated to store and forward user data related to various applications, such as electronic mail, digitised voice, sensor information (pressure, temperature, etc.), remote control information (IoT) for consumer or industrial applications, images or computer data for example.

No restriction is attached to the satellite type of the first satellite 100.1, the number of satellites involved or the coverage area.

The first satellite 100.1 is also configured to communicate with a set of at least one terrestrial gateway, including a first gateway 120 that is shown on figure 1. No restriction is attached to the number of terrestrial gateways 120 that are comprised in the telecommunication system 10.

The set of at least one gateway forms an interface between the satellites 100.1-100.3 and a core network 121 that can be used for both Non-Terrestrial Network NTN (which can be a 5G NR NTN or a 4G/LTE NTN) and the Terrestrial Network TN (which can be a 5G NR TN or a 4G/LTE TN).

The core network 121 is further potentially configured to communicate with a plurality of terrestrial base stations, including for example a first base station 122.1 and a second base station 122.2. In practice, the TN comprises more than two terrestrial base stations, and no restriction is attached to the number of terrestrial base stations of the telecommunications system 10. The terrestrial base stations are therefore nodes of a Radio Access Network, RAN of the telecommunications system 10, such as an NG-RAN.

In a 5G NR TN, such base stations are called gNodeB, noted gNB. In a 4G TN, the base stations are called eNB.

In the telecommunications system 10, the first to third satellite 100.1-100.3 are regenerative and therefore have processing and memory capabilities that allow them to perform the functions of a gNB and/or eNB on the satellite. Therefore, the base stations 122.1 and 122.2 are part of terrestrial base stations network or TN RAN whereas the satellites 101.1 to 101.3 are part of non-terrestrial base stations network or NTN RAN.

Each terrestrial base station has a coverage area forming a TN cell in which the base station can communicate with UEs via a radio channel. For example, as shown on figure 1, the first base station 122.1, which can be noted TN gNB1 or TN eNB1, can serve UEs located in a first cell 123.1, and the second base station 122.2, which can be noted TN gNB2 or TN eNB2, can serve UEs located in a second cell 123.2. The first and second cells 123.1 and 123.2 may be disjoint or may partially overlap.

As shown on figure 1, the first and second cells 123.1 and 123.2 may be comprised, at least partially, in a broader NTN cell, such as the first NTN cell 101 associated with the first satellite 100.1. Also, as shown on figure 1, some parts of the first NTN cell 101 may not be served by any TN cell, so that a UE located in this part can only access the RAN via the first satellite 100.1: this is the case of the first UE 110.1 illustrated on figure 1, which is located inside the first NTN cell 101, but outside of the first and second TN cells 123.1 and 123.2.

The second satellite 100.2 may also be associated with a second NTN cell and the third satellite 100.3 may also be associated with a third NTN cell, the second and third NTN cells being not represented on figure 1 for improving the readability of the figure. The NTN cells may partly overlap or not overlap at all.

For example, a second UE 110.2 can be located in the second NTN cell and can therefore communicate with the second satellite 100.2 during a given period.

It is to be noted that the position of the NTN cells may vary, because the relative positions between the satellites and the earth vary when the satellites are not (in perfect) geostationary (orbit). Therefore, even a same static UE (even if is not moving), may be inside a NTN cell during a first time period and outside the same NTN cell during a second time period.

As explained above, no restriction is attached to the respective satellite types of the first, second and third satellites 100.1-100.3. According to some embodiments, the satellites 100.1-100.3 can be of the same satellite type (for example, HEO), and of the same constellation, but are on different orbits. Alternatively, the satellites 100.1-100.3 are of the same satellite type and are on the same orbit (so that they have the same trajectory). Still alternatively, the satellites 100.1-100.3 are of different satellite types.

The core network 121 is further interfaced with a public data network 130, which can be an Internet Protocol, IP, network, such as the internet, which enables UEs accessing the (TN or NTN) RAN to communicate with remote servers or devices via the IP network 130.

In what follows, the radio interfaces/optical interfaces/links between the components of the telecommunications system 10, are described.

A first service link 140.1 can be established between the first UE 110.1 and the first satellite 100.1. The first satellite 100.1 may receive first user data from the first UE 110.1, to be stored and forwarded to one of the terrestrial gateway, for example to the gateway 120, to be routed to its recipient via the core network 121. Alternatively, the core network or part of the core network functions can be on the satellite.

A second service link 140.2 can be established between the second UE 110.2 and the second satellite 100.2.

The first satellite 100.1 can store user data of the UEs it serves, and forward a set of stored user data (including all the stored user data or a part of it) to one of the terrestrial gateways, when a communication link, named feeder link, can be established with the gateway. On figure 1, a first feeder link 150.1 can be established between the first satellite 100.1 and the terrestrial gateway 120.

As explained above, the first feeder link 150.1 with the terrestrial gateways is intermittent (cannot be continuously maintained), because of the satellite motion, of the low number of terrestrial gateways and/or the low number of satellites (e.g. during initial deployment of the constellation) and/or of the change in radio conditions.

The second satellite 100.2 can also establish a second feeder link 150.2 with the terrestrial gateway 120, or with another terrestrial gateway that is not shown on figure 1. The second feeder link 150.2 may be permanent (for example if the second satellite 100.2 is geostationary) or may also be intermittent.

The third satellite 100.3 can also establish a third feeder link 150.3 with the terrestrial gateway 120, or with another terrestrial gateway that is not shown on figure 1. The third feeder link 150.3 may be permanent (for example if the third satellite 100.3 is geostationary) or may also be intermittent.

According to the invention, a first inter-satellite link, ISL, 160.12 can be established between the first satellite 100.1 and the second satellite 100.2 to exchange satellite information and user data as described in what follows. The satellite information can be requested and received using a predetermined protocol, which can be the Xn Application Protocol, XnAP, defined in technical specifications TS 38.423 of the 3GPP, release 18, May 2024, or which can be the X2 Application Protocol, X2AP, defined in the technical specifications 36.423 of the 3GPP, "Evolved Universal Terrestrial Radio Access Network (E-UTRAN); X2 Application Protocol (X2AP)", release 8, September 2020. Alternatively, the protocol may be an NG-like or S1-like protocol.

The protocol XnAP is used to interconnect terrestrial base stations gNBs in a 5G NG TN, and the protocol X2AP is used to interconnect terrestrial base stations eNBs in an LTE network. One of these protocols can be advantageously used according to the invention, to exchange satellite information and user data between two satellites. The NG-like protocol or S1-like protocol (e.g. S1-U or S1-MME/S1-AP) can be used between the gNB and the 5G CN or between eNB and the 4G/LTE CN. For instance, with respect to NG-like protocol, the N2 interface (if gNB on one satellite communicating with AMF on second satellite) or N3/N9 (if gNB on one satellite communicating with UPF on second satellite) could be used. Alternatively and/or additionally, S10 could be used instead of X2/Xn/S1-like. S10 interface is used between two MMEs and can be useful if each satellite has an MME and the communication/information sharing between two satellites is done between 2 MMEs (if one MME on one satellite communicating with MME on second satellite). Alternatively and/or additionally, S11 could be used instead of X2/Xn/S1-like. S11 interface is used between one MME and one S-GW e.g. if one MME on one satellite communicating with S-GW on second satellite to exchange the information.

The first ISL 160.12 can therefore support an X2 or Xn interface according to the invention.

The first ISL 160.12 may also be intermittent, in particular when the first satellite 100.1 and the second satellite 100.2 are in relative motion (are not geostationary and are not on the same orbit).

A second ISL 160.23 can be established between the second satellite 100.2 and the third satellite 100.3, which preferably also supports an X2 or Xn interface between the second satellite 100.2 and the third satellite 100.3.

No ISL is shown on figure 1 between the first satellite 100.1 and the third satellite 100.3: this may be because, at the instant corresponding to the situation of figure 1, the first satellite 100.1 and the third satellite 100.3 cannot establish such an ISL, for example because their relative positions do not allow to establish an ISL (they are two distant for example). In other situations, depending on the relative positions of the first satellite 100.1 and the third satellite 100.3, a third ISL can be established between the first satellite 100.1 and the third satellite 100.3.

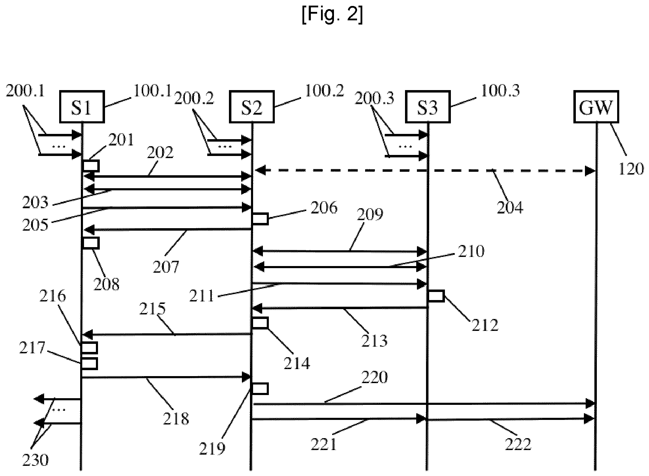

Figure 2 shows the steps of a method for processing user data in a telecommunications system comprising a NTN, according to some embodiments of the invention.

Some of the components of the telecommunications system described on figure 1, are represented on figure 2.

At step 200.1 or steps 200.1, one or several UEs, located in the first NTN cell 101, connect to the first satellite 100.1 via respective service links as previously described. No restriction is attached to the number of UEs connected to the first satellite 100.1 via respective service links, this number varying over time, as UEs may enter or leave the first NTN cell 101 or may stop communicating with the first satellite 100.1 by deactivating their service link/or simply by any kind of service link interruption e.g. due to UE or satellite mobility. Also, no restriction is attached to the order and timing of the respective establishments of service links with the UEs located in the first NTN cell 101. Although steps 200.1 are shown as being implemented at the beginning of the method, they are performed continuously, any time a new UE establishes a service link with the first satellite 100.1. A table of the UEs that are served by the first satellite 100.1 can be maintained by the first satellite 100.1, and updated every time a new service link is established and every time a service link is terminated.

At step 200.2 or steps 200.2, one or several UEs, located in the second NTN cell connect to the second satellite 100.2 via respective service links as previously described. No restriction is attached to the number of UEs connected to the second satellite 100.2 via respective service links, this number varying over time, as UEs may enter or leave the second NTN cell or may stop communicating with the second satellite 100.2 by deactivating their service link/or simply by any kind of service link interruption e.g. due to UE or satellite mobility. Also, no restriction is attached to the order and timing of the respective establishments of service links with the UEs located in the second NTN cell. As per steps 200.1, although steps 200.2 are shown as being implemented at the beginning of the method, they are performed continuously, any time a new UE establishes a service link with the second satellite 100.2. A table of the UEs that are served by the second satellite 100.2 can be maintained by the second satellite 100.2, and updated every time a new service link is established and every time a service link is terminated.

At step 200.3 or steps 200.3, one or several UEs, located in the third NTN cell connect to the second satellite 100.3 via respective service links as previously described. No restriction is attached to the number of UEs connected to the third satellite 100.3 via respective service links, this number varying over time, as UEs may enter or leave the second NTN cell or may stop communicating with the third satellite 100.3 by deactivating their service link/or simply by any kind of service link interruption e.g. due to UE or satellite mobility. Also, no restriction is attached to the order and timing of the respective establishments of service links with the UEs located in the third NTN cell. As per steps 200.1 and 200.2, although steps 200.3 are shown as being implemented at the beginning of the method, they are performed continuously, any time a new UE establishes a service link with the third satellite 100.3. A table of the UEs that are served by the third satellite 100.3 can be maintained by the third satellite 100.3, and updated every time a new service link is established and every time a service link is terminated.

At a step 201, the first satellite 100.1 may check if a predetermined overload condition and/or delay condition is met, and if no feeder link with a terrestrial gateway is available. For example the overload condition can be associated with a predetermined load threshold and the load condition is met if a current load of user data received from the UEs connected to the first satellite 100.1 is higher than the predefined threshold. The predetermined load threshold can be expressed as :
- a percentage value of storage capacities. The current load can therefore be defined by the percentage of storage capacities that are currently used by the first satellite 100.1 ;
- a percentage value of processing capacities (CPU). The current load can therefore be defined by the percentage of processing capacities that are currently used by the first satellite 100.1; and/or a percentage value of energy capacities and/or
- a number of UEs served in the first NTN cell 101. The current load can therefore be defined by the number of UEs currently served by the first satellite 100.1.

The delay condition can be associated with a predetermined delay threshold: if a current average delay for processing or transferring user data by the first satellite 100.1 is above the predetermined delay threshold, then the delay condition is met.

Step 201 can be repeated at a given frequency, until the first satellite 100.1 determines that the predetermined overload condition and/or delay condition is met and no feeder link with a terrestrial gateway is available. In that case, the method can go further with step 202. This corresponds to a first embodiment in which step 202 is conditioned by a positive check at step 201 (which means that the first satellite is overloaded and/or has too important delays, and that no feeder link is available).

In other situations, which are not further described in the following description, if the first feeder link 150.1 is available, user data stored in the first satellite 10.1 can be directly transferred to the terrestrial base station 120, which reduces the load of the first satellite 100.1.

Alternatively, according to a second embodiment described in what follows, step 202 is performed without condition (independently from step 201).

At a step 202, the first ISL 160.12 is established between the first satellite 100.1 and the second satellite 100.2.

At a step 203, an X2 or Xn interface supported by the first ISL 160.12 is activated between the first satellite 100.1 and the second satellite 100.2.

At a step 204, the second feeder link 150.2 is established between the second satellite 100.2 and a terrestrial gateway, such as the first terrestrial gateway 120 for example. No restriction is attached to the timing of step 204 (and the timing shown on figure 2 is given for illustrative purposes only), which depends on the trajectory of the second satellite 100.2 and of the positions of the terrestrial gateways. Indeed, as explained above, the second feeder link 150.2 may be permanent (if the second satellite 100.2 is geostationary) or may be intermittent.

At a step 205, the first satellite 100.1 transmits a request message on the X2 or Xn interface activated at step 203, to the second satellite 100.2, the request message requesting satellite information related to the second satellite 100.2.

At a step 206, in response to the request message, the second satellite 100.2 determines a response message comprising satellite information related to the second satellite 100.2.

At a step 207, the second satellite 100.2 transmits the response message to the first satellite 100.1, via the X2 or Xn interface.

No restriction is attached to the format of the request message and of the response message, nor to the type of satellite information related to the second satellite 100.2 that is conveyed by the response message.

For example, the request message and the response message may be :
- respectively, an Xn Setup Request and an Xn Setup Response, as defined in the 3GPP technical specifications TS 38.423;
- respectively, a Mobility Change Request and a Mobility Change Acknowledge, as defined in the 3GPP technical specifications TS 38.423;
- respectively, a Resource Status Request and a Resource Status Response, as defined in the 3GPP technical specifications TS 38.423;
- respectively, a Data Collection Request and a Data Collection Response, as defined in the 3GPP technical specifications TS 38.423;
- respectively, an NG-RAN Node Configuration Update and an NG-RAN Node Configuration Update Acknowledge as defined in the 3GPP technical specifications TS 38.423.

Alternatively, when an X2 interface is activated at step 203, the request message and the response message may be messages that are defined in the 3GPP technical specification TS 36.423 describing the X2AP. Alternatively, the protocol may be an NG-like or S1-like protocol. The NG-like protocol or S1-like protocol can be used between the gNB and the 5G CN or between eNB and the 4G/LTE CN. For instance, with respect to NG-like protocol, the N2 interface (if gNB on one satellite communicating with AMF on second satellite) and/or N3/N9 (if gNB on one satellite communicating with UPF on second satellite) could be used. Alternatively and/or additionally, S10 could be used instead of X2/Xn/S1-like. S10 interface is used between two MMEs and can be useful if each satellite has an MME and the communication/information sharing between two satellites is done between 2 MMEs (if one MME on one satellite communicating with MME on second satellite). Alternatively and/or additionally, S11 could be used instead of X2/Xn/S1-like. S11 interface is used between one MME and one S-GW e.g. if one MME on one satellite communicating with S-GW on second satellite to exchange the information.

This enables to take advantage of a preexisting and interoperable protocol, to implement the exchange of satellite information according to the invention.

The satellite information related to the second satellite 100.2, that is included in the response message, is preferably representative of storage and/or processing capacities of the second satellite 100.2, of the ISL 160.23 and/or of the quality a feeder link 150.2 between the second satellite 100.2 and the terrestrial gateway.

For example, the satellite information related to the second satellite 100.2 may comprise one or several of the following information:
- an updated ISL time interval of the first ISL 160.12 between the first satellite 100.1 and the second satellite 100.2; and/or
- at least one feeder link time interval describing the availability of a feeder link 150.2 for the second satellite 100.2; and/or the throughput capacity of the link and/or
- at least one satellite capacity information, describing maximum or current storage capacity, or maximum or current processing (CPU) capacity, or/and maximum or current/future (available/remaining) energy capacity, of the second satellite 100.2; and/or
- a satellite type of the second satellite 100.2; and/or
- position and speed information related to the second satellite 100.2, for example PVT information indicating a position and associated velocity and time; and/or
- feeder link latency indicating a latency associated with a feeder link 150.2 between the second satellite 100.2 and a terrestrial gateway such as the first terrestrial gateway 120; and/or
- a current load and/or used capacity of the second satellite 100.2, and/or amount of data received (and/or to be transmitted) from (to) the second satellite. or simply a load indication which can be described by Scheduling Requests, SR and/or Buffer Status Report, BSR, of UEs connected to the second satellite 100.2 in the second NTN cell.

According to some embodiments, the request message may specify a type, or several types, of satellite information that is requested by the first satellite 100.1. For example, the request message may indicate that ISL and/or feeder link information is requested, in which case the second satellite 100.2 determines the satellite information to be included in the response message based on the satellite information type included in the request message.

At a step 208, the first satellite 100.1 stores the satellite information related to the second satellite 100.2. For example, the satellite information related to the second satellite 100.2 can be used to update a connectivity table comprising satellite information related to a plurality of other satellites. Indeed, steps 202, 203, 205 to 207 can be performed for a plurality of other satellites, which can communicate with the first satellite 100.1 (for which an ISL can be established during a given period). Alternatively, the plurality of other satellites including the second satellite can be located at a single-hop or a multi-hop distance from the first satellite. Alternatively or in complement, the connectivity table may contain information (e.g. amount of data to be transmitted and multi-hop distance) with respect to the gateway or gateways.

The connectivity table can therefore be updated every time satellite information is obtained from another satellite by performing steps 205 to 207 described above.

Optional steps 209 to 216 are described in what follows. At step 209, a second ISL 160.23 is established between the second satellite 100.2 and the third satellite 100.3. At step 210, an X2 or Xn interface is activated between the second satellite 100.2 and the third satellite 100.3. Alternatively, the protocol may be an NG-like or S1-like protocol. The NG-like protocol or S1-like protocol can be used between the gNB and the 5G CN or between eNB and the 4G/LTE CN.

At a step 211, the second satellite 100.2 transmits a second request message (the request message sent by the first satellite 100.1 at step 205 being therefore a first request message) to the third satellite 100.3 on the Xn or X2 interface activated at step 210, the second request message requesting satellite information related to the third satellite 100.3.

At a step 212, in response to the request message, the third satellite 100.3 determines a second response message (the response message determined at step 206 described above being therefore a first response message) comprising satellite information related to the third satellite 100.3.

At a step 213, the third satellite 100.3 transmits the second response message to the second satellite 100.2, via the X2 or Xn interface.

The formats of the second request message and second response message may be identical to the formats of the first request message and second response message previously described for steps 205 to 207.

Also, the type of satellite information that is included in the second response message may be similar to the type or types of satellite information included in the first response message, including one or several of the following information:
- an updated ISL time interval of the second ISL 160.23 between the second satellite 100.2 and the third satellite 100.3; and/or
- at least one feeder link time interval describing the availability of a feeder link 150.3 for the third satellite 100.3; and/or the throughput capacity of the link and/or
- at least one satellite capacity information, describing maximum or current storage capacity, or maximum or current processing (CPU) capacity, or/and maximum or current/future (available/remaining) energy capacity, of the third satellite 100.3; and/or
- a satellite type of the third satellite 100.3; and/or
- position and speed information related to the third satellite 100.3, for example PVT information indicating a position and associated velocity and time;
- feeder link latency indicating a latency associated with a feeder link 150.3 between the third satellite 100.3 and a terrestrial gateway such as the first terrestrial gateway 120; and/or
- a current load and/or used capacity of the third satellite 100.3, and/or amount of data received (and/or to be transmitted) from (to) the second satellite, or simply a load indication which can be described by Scheduling Requests, SR and/or Buffer Status Report, BSR, of UEs connected to the third satellite 100.3 in the third NTN cell.

At a step 214, the second satellite 100.2 may determine an update of satellite information related to the second satellite 100.2 (of its own satellite information), based on the satellite information related to the third satellite 100.3 or based on changes in the capacity of the second satellite 100.2 or in the feeder link 150.2 availability. For example, the current storage capacity or current processing capacity of the second satellite 100.2 can be updated based on the satellite information related to the third satellite 100.3, because the second satellite 100.2 may determine that it can forward user data to the third satellite 100.3 as the third satellite 100.3 has more important current storage capacity or current processing capacity, and/or because the third feeder link 150.3 is available with a low delay for example.

No restriction is attached to how the second satellite 100.2 determines the satellite information update, which may be further based on satellite information obtained from other satellites than the third satellite 100.3. The second satellite 100.2 may in particular maintain its own connectivity table, in a similar manner to the above description of step 208 for the first satellite 100.1. Alternatively, the plurality of other satellites including the third satellite can be located at a single-hop or a multi-hop distance from the first satellite. Alternatively or in complement, the connectivity table may contain information (e.g. amount of data to be transmitted and multi-hop distance) with respect to the gateway or gateways.

The satellite information update related to the second satellite 100.2 contains therefore one information that is updated (that is different), compared to the satellite information related to the second satellite 100.2 included in the response message transmitted at step 207 to the first satellite 100.1.

At a step 215, the second satellite 100.2 transmits an update message comprising the satellite information update related to the second satellite 100.2 to the first satellite 100.1, on the X2 or Xn interface. Alternatively, the protocol may be an NG-like or S1-like protocol. The NG-like protocol or S1-like protocol can be used between the gNB and the 5G CN or between eNB and the 4G/LTE CN. The update message may also be a message defined by the XnAP or X2AP, such as, for example:
- a Resource Status Update, if the first request message is a Resource Status Request and the first response message is a Resource Status Response, as defined in the 3GPP technical specifications TS 38.423; or
- a Data Collection Update, if the first request message is a Data Collection Request, and the first response message is a Data Collection Response, as defined in the 3GPP technical specifications TS 38.423.

At a step 216, the first satellite 100.1 may update the stored satellite information related to the second satellite 100.2, based on the satellite information update comprised in the received update message. For example, the first satellite 100.1 may update its connectivity table base on the satellite information update comprised in the received update message.

As per the response message of step 207, the first satellite 100.1 may receive update messages from a plurality of other satellites, and may update its connectivity table based on the received plurality of update messages.

At a step 217, the first satellite 100.1 decides to transfer a set of user data (all the stored user data, or a part of it) to at least one satellite for which the first satellite 100.1 stores satellite information, this decision being based on the stored satellite information. For example, the first satellite 100.1 can decide to transfer user data currently stored on the first satellite 100.1, to the second satellite 100.2, based on the satellite information received at step 207, and optionally updated at step 215.

Such a decision can be based on a predetermined set of at least criterion, applied to the stored satellite information obtained from other satellites. No restriction is attached to the set of at least one criterion. For example, the criterion can be based on a comparison between a satellite information of the first satellite 100.1 and a satellite information of the second satellite 100.2. In that case, the criterion may be that the satellite information of the first satellite 100.1 is higher (or lower depending on the criterion) than the satellite information of the second satellite 100.2. Examples of criteria are given hereafter for illustrative purposes:
- a first criterion may be that the feeder link latency of the second satellite 100.2 is lower than the feeder link latency of the first satellite 100.1. This criterion enables to transfer user data to the second satellite 100.2, so that it can be forwarded to a terrestrial gateway in an efficient manner;
- a second criterion may be that the current storage capacity of the second satellite 100.2 is higher than the current storage capacity of the first satellite 100.1. This criterion enables to transfer user data to the second satellite 100.2, so that it can store it in the memory of the second satellite 100.2;
- a third criterion may be that the current processing capacity of the second satellite 100.2 is higher than the current processing capacity of the first satellite 100.1. This criterion enables to transfer user data to the second satellite 100.2 if the latter can process the user data more efficiently than the first satellite 100.1.

More complex criteria may be based on several comparisons of satellite information of the first satellite 100.1 and of the second satellite 100.2, according to some embodiments of the invention.

The decision of step 217 can comprise, if the first satellite 100.1 stores satellite information of several other satellites, the selection of a satellite among the other satellites for which the first satellite 100.1 stores satellite information, the selection being based on the stored satellite information associated with the other satellites.

For example, the first satellite 100.1 selects the other satellite having the lowest feeder link delay, having the highest storage capacity and/or having the highest processing capacities. According to some embodiments, the decision of step 217 comprises selecting several satellites among the other satellites for which the first satellite 100.1 stores satellite information, the selection being based on the stored satellite information associated with the other satellites. The set of data can therefore be split to be transferred t the several selected other satellites.

In some situations, the first satellite 100.1 determines at step 217 that transfer of user data to at least one other satellite is not possible. In these situations, step 218 described below is not performed. These situations may occur when the first satellite 100.1 has more storage capacity, more processing capacity and/or a lower feeder link delay than the other satellites.

At a step 218, the first satellite 100.1 transfers user data to the other satellite identified in the decision of step 217 (or to the several other satellites selected at step 217), for example to the second satellite 100.2 in the example shown on figure 2, on the Xn or X2 interface. Alternatively, the protocol may be an NG-like or S1-like protocol. The NG-like protocol or S1-like protocol can be used between the gNB and the 5G CN or between eNB and the 4G/LTE CN.

Upon reception of the set of user data from the first satellite 100.1, the second satellite 100.2 may:
- store the set of user data in a memory of the second satellite 100.2 at a step 219; or
- forward the set of user data directly to the terrestrial gateway 120 at a step 220; or
- forward the set of user data to the third satellite 100.3 at a step 221, so that the third satellite 100.3 forwards the set of user data to the terrestrial gateway 120 at a step 222.

To this end, the second satellite may decide to store or forward the received user data to the terrestrial gateway 120 directly or via the third satellite 100.3, based on its own satellite information and optionally based on the satellite information received from other satellites such as the third satellite 100.3 for example.

Alternatively, the second satellite 100.2 may decide to store a part of the set of user data it received, and to forward the other part of the set of user data to the terrestrial gateway 120 directly or via the third satellite 100.3, based on its own satellite information and optionally based on the satellite information received from other satellites such as the third satellite 100.3 for example.

In the first embodiment, step 202 is triggered by step 201: this means that the first satellite 101 determines or updates its connectivity table when an overload condition and/or delay condition is met. In the first embodiment, the ISLs with the other satellites are therefore activated only when needed.

Alternatively, according to the second embodiment, the first satellite 101 maintains the ISL activated with every other satellite that is accessible, so as to continuously update the satellite information related to the other satellites, in the connectivity table for example.

Therefore, in the second embodiment, steps 202 to 216 are not dependent on the overload condition or delay condition of step 201. In the second embodiment, step 201 can therefore be performed anytime, to detect that the overload or delay condition is met. Upon detection that the overload or delay condition is met, step 217 is triggered according to the second embodiment.

At optional steps 230, the first satellite 100.1 may transmit a stop message to the UEs served in the first NTN cell to indicate to stop transmitting uplink user data to the first satellite 100.1, for example because the current percentage of storage capacities used by the first satellite 100.1 is higher than a predefined threshold (which can be the predefined threshold described previously when referring to step 201). The stop message may be a Master Information Block MIB or System Information Block SIB for example. No restriction is attached to the timing of steps 230, which can be carried out when the first satellite 100.1 determines that the overload condition is met at step 201 in the first embodiment, or at step 216 in the second embodiment.

This enables to avoid increasing the overload of the first satellite 100.1 until user data can be transferred to another satellite.

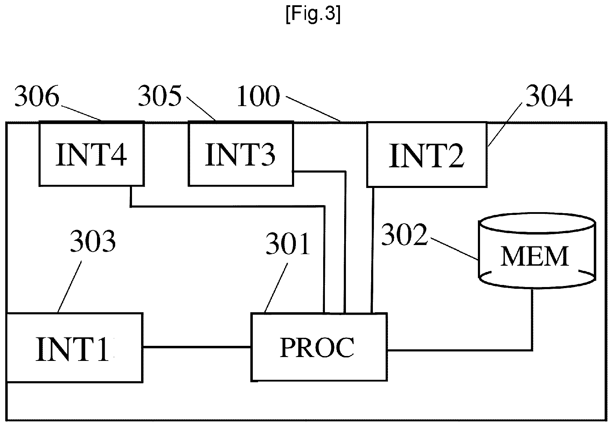

Figure 3 shows the structure of a satellite 100, which can be the first satellite 100.1 described previously, according to some embodiments of the invention. The description of the satellite 100 may also apply to the second satellite 100.2 and the third satellite 100.3.

As explained above, the satellite 100 may be an S&F satellite of an NTN.

The satellite 100 comprises a processor 301, defined by processing capacities, and a memory 302, defined by a maximum storage capacity.

The processor 301 may comprise one or multiple microprocessors, a Central Processing Unit (CPU), on a single Integrated Circuit (IC) or several IC chips.

No restriction is attached to the memory 302, which may be any non-transient, tangible form of memory. For example, it can comprise ROM, RAM, EEPROM and/or flash memory. The processor 301 may be programmable and may be configured to execute instructions that are stored in its internal memory or to execute instructions that are stored in the memory 302.

The memory 302 can store instructions for implementing the steps 200.1, 201 to 203, 205, 207, 208, 215 to 218 and 230 described above.

The satellite 100 further comprises a first radio interface (or in another example an optical interface) 303, which can be configured to communicate with UEs located in an NTN cell associated with the satellite 100.

The satellite 100 further comprises a second radio interface or optical interface 304, arranged to communicate with other satellites via an ISL as previously described. As explained above, the ISL can support an X2 or Xn interface for example.

The satellite 100 further comprises a third radio interface or optical interface 305, arranged to communicate with terrestrial gateways, such as the first terrestrial gateway 120 shown on figure 1.

The embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of processing user data in a first satellite (100.1) of a Non-Terrestrial Network, NTN, wherein the first satellite stores user data from at least one user equipment (110.1) located in a first cell (101) served by the first satellite, the method comprising the following steps:
- transmitting (205) a request message to a second satellite of the NTN, the request message requesting satellite information related to a second satellite (100.2);
- receiving (207) a response message from the second satellite, the response message comprising satellite information related to the second satellite;
- deciding (217) to transfer a set of stored user data to the second satellite, based at least on the satellite information related to the second satellite;
- transferring (218) the set of stored user data to the second satellite.

2. The method according to claim 1, further comprising establishing (202) an Inter-Satellite Link (160.12), ISL, between the first satellite (100.1) and the second satellite (100.2) before transmitting the request message.

3. The method according to claim 2, further comprising, after establishing (202) the ISL (160.12) between the first satellite (100.1) and the second satellite (100.2), activating (203) a 5G New Radio, NR, Xn interface, or a Long Term Evolution, LTE, X2 interface, between the first satellite and the second satellite, wherein the request message is transmitted (205) on the X2 or Xn interface and wherein the response message is received (207) on the X2 or Xn interface.

4. The method according to one of the preceding claims, wherein the first satellite (100.1) decides (217) to transfer the set of user data to the second satellite (100.2) if at least one predetermined overload condition and/or predetermined delay condition is met, and if no link to a terrestrial gateway (120) is accessible to the first satellite.

5. The method according to one of the preceding claims, wherein the satellite information related to the second satellite (100.2) is representative of storage and/or processing capabilities of the second satellite, of an inter-satellite link (160.12), ISL, between the first satellite and the second satellite, and/or of a link (150.2) between the second satellite and a terrestrial gateway (120).

6. The method according to claim 5, wherein the satellite information related to the second satellite comprises one or several of the following information:
- an updated ISL time interval of the ISL (160.12) between the first satellite (100.1) and the second satellite (100.2); and/or the throughput capacity of the link and/or
- at least one link time interval describing an availability of a link (150.2) between the second satellite and a terrestrial gateway (120); and/or
- at least one satellite capacity information, describing maximum or current storage capacity or maximum or current processing capacities of the second satellite; and/or
- a satellite type of the second satellite; and/or
- position and speed information related to the second satellite; and/or
- feeder link latency indicating a latency associated with the link between the second satellite and the terrestrial gateway; and/or
- a current load and/or used capacity of the second satellite. and/or amount of data received (and/or to be transmitted) from (to) the second satellite.

7. The method according to one of the preceding claims, further comprising, storing (208), by the first satellite (100.1), the satellite information related to the second satellite (100.2) in a connectivity table.

8. The method according to claim 7, further comprising, after receiving (207) the response message comprising the satellite information related to the second satellite (100.2), receiving (215) an update message comprising satellite information update related to the second satellite, and updating (216) the satellite information related to the second satellite stored in the connectivity table based on the satellite information update.

9. The method according to claim 7 or 8, wherein the first satellite (100.1) transmits (205) request messages to a plurality of other satellites including the second satellite (100.2), receives (207) response messages from the plurality of other satellite, each response message comprising satellite information related to the other satellite from which the response message is received, and wherein the first satellite stores (208) the received satellite information for the plurality of other satellites in the connectivity table.

10. The method according to claim 9, wherein the decision (217) to transfer user data to the second satellite (100.2) comprises selecting the second satellite among the plurality of other satellites based on the satellite information stored in the connectivity table.

11. The method according to one of the preceding claims, wherein the decision (217) to transfer user data to the second satellite (100.2) comprises a comparison of satellite information related to the first satellite with the satellite information related to the second satellite.

12. A computer program comprising instructions arranged for implementing the method according to one of claims 1 to 11, when said instructions are executed by a processor (301).

13. A satellite (100.1) of a Non-Terrestrial Network, NTN, comprising a memory (302) storing user data from at least one user equipment (110.1) located in a first cell (101) served by the first satellite, the satellite further comprising a processor (301) configured for:
- transmitting, via a radio interface or optical interface (304), a request message to a second satellite (100.2) of the NTN, the request message requesting satellite information related to another satellite;
- receiving, via the radio interface or optical interface, a response message from the other satellite, the response message comprising satellite information related to the second satellite;
- deciding to transfer a set of stored user data to the second satellite, based at least on the satellite information related to the other satellite;
- transferring, via the radio interface or optical interface, the set of stored user data to the other satellite.

14. A telecommunications system comprising several satellites (100.1; 100.2; 100.3) according to claim 13, and at least one terrestrial gateway (120) configured to communicate with the satellites via respective radio links, wherein the terrestrial gateway is connected to a core network (121) of a non-terrestrial and terrestrial network.
